# EUROPÄISCHE PATENTANMELDUNG

(11) **EP 2 551 307 A1**
(43) Veröffentlichungstag der Anmeldung: **30.01.2013**
(21) Anmeldenummer: 11175605.2
(22) Anmeldetag: 27.07.2011
(51) Int. Cl.: C09D 13/00

(54) **Mine**

(71) Anmelder: Faber- Castell AG, 90546 Stein (DE)
(72) Erfinder: Appel, Reiner, 90522 Oberasbach (DE); Lugert, Dr. Gerhard, 90431 Nürnberg (DE)
(74) Vertreter: Mörtel & Höfner

(57) **Zusammenfassung**

Die Erfindung betrifft eine Mine für Schreib- und/oder Malzwecke, mit 15% bis 30% einer Minengrundmasse auf Fett- und Wachsbasis und 40% bis 80% wenigstens eines Füllstoffs und 0,1% bis 30% organische und/oder anorganische Farbpigmente, wobei die Minengrundmasse - bezogen auf die Gesamtmasse der Mine - 0,5% bis 10% Aluminiumdistearat, 5% bis 20% oxidiertes Polyethylenwachs, 5% bis 20% wenigstens einer Fettsäure und/oder wenigstens eines Fettsäurederivats mit einem Schmelzpunkt von 50°C bis 110°C, und 0,5% bis 10% wenigstens eines thermoplastischen Kunststoffs enthält.

## Beschreibung

Die Erfindung betrifft eine Mine für Schreib- und Malzwecke. Unter einer Mine ist eine Stiftmine, die zur Anordnung innerhalb eines Stiftschaftes etwa aus Holz oder Kunststoff vorgesehen ist, oder eine Kreide, die für eine Verwendung ohne einen solchen Stiftschaft vorgesehen ist, zu verstehen. Eine Mine wird bei der Erzeugung eines Aufstriches auf einer Unterlage wie Papier einer relativ starken mechanischen Belastung ausgesetzt. Dies liegt unter anderem daran, dass bei Schreib-und Malarbeiten weiche Minen, mit denen relativ große Mengen auf eine Unterlage übertragen werden können, etwa wie dies bei Kosmetikstiften der Fall ist, meist nicht zweckmäßig. Minen für den in Rede stehenden Zweck weisen daher eine festere Konsistenz auf und sind insgesamt bruchstabiler als Kosmetikminen. Die erforderliche Festigkeit wird beispielsweise bei Kunststoffminen durch Verwendung polymerer Bindemittel erreicht. Solche Kunststoffminen weisen zwar eine ausreichende Festigkeit auf, sind aber hinsichtlich ihres Aufstrichverhaltens nicht optimal. Es sind relativ hohe Kräfte erforderlich, um so viel Minenmasse auf die Unterlage zu applizieren, dass einigermaßen deckende Aufstriche entstehen. Um die Deckkraft der Kunststoffminen zu erhöhen, kann der Minenmasse eine erhöhte Menge an Farbpigmenten zugesetzt werden, was allerdings die Herstellung solcher Minen verteuert. Ein weiterer Nachteil von Kunststoffminen ist die Tatsache, dass zur thermoplastischen Erweichung des polymeren Bindemittels, beispielsweise Polyvinylbutyral bei der aus EP 1069166 B1 bekannten Mine, die Vermischung der Ausgangssubstanzen und die Extrusion von Minensträngen bei relativ hohen Temperaturen von bis zu 180 °C erfolgen muss, was einen entsprechend hohen Energieaufwand bedeutet. Bedingt durch die hohen Verarbeitungstemperaturen können temperaturempfindliche Pigmente wie Azopigmentenicht verwendet werden. Beispielsweise sind die Azopigmente C.I. 11741 Pigment Yellow 74 und C.I. 12085 Pigment Red 4 nur bis 160°C bzw. 140°C beständig.

Aufgabe der Erfindung ist es, eine Mine für Schreib- oder Malzwecke anzugeben, mit der sich bei geringem Kraftaufwand und bei geringem Einsatz an Farbpigmenten auf einer Unterlage farbkräftige und deckende Abstriche erzeugen lassen, wobei sich die Mine bei Temperaturen unterhalb von 160°C verarbeiten, insbesondere extrudieren oder coextrudieren lässt.

Diese Aufgabe wird durch eine Mine gelöst, die 15% bis 30% einer Minengrundmasse auf Fett- und Wachsbasis und 40% bis 80 % eines Füllstoffs und 0,1% bis 30% Farbmittel, vorzugsweise organische und/oder anorganische Farbpigmente, enthält, wobei die Minengrundmasse - bezogen auf die Gesamtmasse der Mine - 0,5% bis 10% Aluminiumdistearat, 5% bis 20% oxidiertes Polyethylenwachs, 5% bis 20% eines wenigstens einer Fettsäure und/oder wenigstens eines Fettsäurederivats mit einem Schmelzpunkt von 50°C bis 110°und 0,5% bis 10% wenigstens eines thermoplastischen Kunststoffs enthält. Als Fettsäurederivate kommen insbesondere Fettsäureester und Fettalkohole in Betracht. Die Ausgangsubstanzen einer solchen Mine, nämlich die pulver- oder flockenförmigen Bestandteile der Minengrundmasse, wenigstens ein beigemengter Füllstoff und gegebenenfalls ein Farbpigment, lassen sich bereits bei einer Temperatur von etwa 120°C innig vermischen, und bei einer Temperatur von etwa 130°C extrudieren. Dabei kommt es zu einer Erweichung der Minengrundmasse, wobei deren Konsistenz so beschaffen ist, dass sich trotz eines hohen Anteils an Füllstoff und Farbpigment Minenstränge mit einem Durchmesser z.B. von 3 bis 5 mm, im Falle von Kreiden auch mehr, extrudieren lassen, die ohne die Gefahr einer mechanischen Beeinträchtigung, etwa beim Weitertransport zu einer Einleimstation, handhabbar sind. Bei Extrusionsversuchen zeigte sich überraschender Weise, dass sich erfindungsgemäße Minen im Vergleich zu beispielsweise PVB als Bindemittel enthaltenden Polymerminen mit höheren Geschwindigkeiten, nämlich solchen von bis zu 60 m/min extrudieren lassen. Eine derart schnelle Extrusion lässt sich nur durchführen, wenn die auf eine Extrusionstemperatur von beispielsweise 130°C erhitzte Minenmasse eine entsprechend feste Konsistenz aufweist. Dies lässt sich bei Polymerminen zwar durch Zusatz geeigneter Verdicker oder durch eine erhöhte Menge an Kunststoff erreichen. Eine solche Maßnahme wirkt sich aber auch auf den extrudierten Minenstrang aus, d.h. dieser kann zu hart oder von gummiartiger Konsistenz sein, was einem weichen Abstrichverhalten und dem Ziel, deckende Abstriche auf einer Unterlage zu erzeugen, zuwiderläuft. Anders ist dies bei einer erfindungsgemäßen Mine, deren Minengrundmasse im erhitzten bzw. erweichten Zustand eine für die Extrusion von Minensträngen gut geeignete Konsistenz aufweist, wobei aber aus den extrudierten Minensträngen Minen ablängbar sind, die weder hart sind noch eine gummiartige Konsistenz aufweisen, sondern die sich unter Bildung farbkräftiger und deckender Aufstriche auf einer Unterlage erzeugen lassen.

Hervorzuheben ist weiterhin, dass für das Mischen der Ausgangssubstanzen im Vergleich zu Polymerminen ein geringerer Zeitbedarf erforderlich ist. Schließlich ist im Hinblick auf die Herstellungskosten vorteilhaft, dass sich mit der Mine trotz relativ geringem Anteil an Farbpigmenten farbkräftige deckende Aufstriche erzeugen lassen. Dabei ist die Mine im Anschluss an die Extrusion ausreichend mechanisch stabil und bruchfest, um den Belastungen die sich bei normalem Gebrauch ergeben, standzuhalten. Besonders eignet sich die erfindungsgemäße Mine auch für eine Coextrusion, bei der eine Mine zusammen mit einer Stiftumhüllung aus einem Kunststoff, insbesondere einem holzähnlichen Verbundwerkstoff, in einem Schritt extrudiert wird. Verbundwerkstoffe der genannten Art, sogenannte Wood-Plastic Compounds (WPC) sind Mischungen, die einen thermoplastischen Kunststoffe und Holz- und/oder Cellulose-Partikel enthalten. Die Mine ermöglicht somit ein Verfahren, bei dem mittels einer Coextrusion ein Stift mit einer die Mine umschließenden Stiftumhüllung auf einfache Weise herstellbar ist.

Für das gute Aufstrichverhalten der Mine ist in hohem Maße die in der Mine enthaltende Fettsubstanz, also Fettsäure und/oder Fettsäurederivat verantwortlich. Das Aufstrichverhalten lässt sich durch die Wahl des Schmelzpunkts der Fettsubstanz steuern. So können bei Verwendung beispielsweise eines Triglycerids mit einem Schmelzpunkt Minen mit einem weicheren Abstrichverhalten und bei Verwendung beispielsweise einer Mischung aus Stearinsäure enthaltender Sojabohnensäure (CAS-Nr. 57114) und hydrogeniertem Sojabohnenöl (CAS-Nr. 8016-70-4) mit einem Schmelzpunkt von 95°C bis 105°C Minen mit einem härteren Abstrichverhalten hergestellt werden.

Schließlich ist noch von Vorteil, dass trotz hoher Anteile an partikelförmigen Substanzen wie Füllstoffen und Farbpigmenten nur 15% bis 30%, vorzugsweise 15% bis 26% an Minengrundmasse, deren Substanzen vergleichsweise teuer sind, erforderlich sind.

Das eingesetzte oxidierte Polyethylenwachs hat vorzugsweise einen Schmelzpunkt von 115°C bis 125°C, insbesondere von 118°C bis 122°C. Bei Extrusions- oder Mischtemperaturen von mehr als 125°C bzw. 122°C hat das Wachs eine nahezu wasserartige Viskosität. In Mischung mit den weiteren Bestandteilen der Minengrundmasse bildet sich aber bei den vorherrschenden Temperaturen während der Mischens und Extrudierens eine Masse der oben beschriebenen Art aus.

Für die fettartige Substanz der Minengrundmasse wird vorzugsweise ein Triglycerid mit einen Schmelzpunkt von 58 °C bis 62°C eingesetzt.

Die Menge an Aluminiumdistearat, welches für das geschilderte Eigenschaftsprofil der Mine einen wichtigen Beitrag liefert, reichen Mengen von 1% bis 6% oder vorzugsweise von 1% bis 3,5 % aus, wodurch die Kosten für die Herstellung der Mine gesenkt werden können. Gleiches trifft für Polyethylenwachs und Triglycerid zu, deren Anteile auf 7% bis 15% bzw. 5% bis 15% gesenkt werden können, wobei aber hinsichtlich der geschilderten Mineneigenschaften die besten Ergebnisse erreicht sind.

Durch den Zusatz eines thermoplastischen Kunststoffs mit einem Anteil 0,5% bis 10% erhöht sich die Flexibilität der Minen. Dies wirkt sich vor allem bei der Extrusion der Minen aus, so dass sich diese mit größerem Durchsatz, also in größerer Stuckzahl pro Zeiteinheit, letztlich also mit höherer Geschwindigkeit extrudieren lassen, ohne dass es dabei zu Rissbildungen in den Minen kommt oder diese in Teilstücke zerfallen. Besonders geeignet sind Polyolefine, vor allem Polyethylen, beispielsweise LLDPE und HDPE (beide erhältlich unter der Typenbezeichnung IC32 bzw. IB58 von der Firma Braskem, Brasilien) und/oder Polyethylen-Copolymere (z.B. Fusabond von der Firma DuPont) und Polystyrol (z.B. PS amorphos 2650 von der Firma Innova, Brasilien). Durch den Zusatz eines thermoplastischen Kunststoffs besteht insbesondere bei Mengen im oberen Gehaltsbereich die Tendenz, dass das Aufstrichverhalten leicht verschlechtert wird, indem die auf eine Unterlage auftreichbare Minenmasse verringert ist. Dieser Effekt fällt aber praktisch nicht mehr ins Gewicht, wenn eine Obergrenze von thermoplastischem Kunststoff von 6% eingehalten wird.

Der Hauptanteil der Minenmasse wird durch wenigstens einen polaren Füllstoff, vorzugsweise einen Füllstoff aus der Gruppe Kaolin, Glimmer, Bimsmehl und Talk gebildet, wobei Kaolin besonders bevorzugt ist. Ein solcher Füllstoff wird aufgrund seiner Polarität, also aufgrund der Existenz von getrennten Ladungsschwerpunkten in seinem chemischen Aufbau, etwa seiner Kristallstruktur, von einer Grundmasse, die Substanzen mit polaren Molekülgruppen aufweist, besonders gut gebunden. In diesem Sinne ist es daher vorteilhaft, nicht unpolares sondern polares, nämlich oxidiertes PE-Wachs einzusetzen. Die in der Mine enthaltenen Farbmittel, vorzugsweise organische und/oder anorganische Farbpigmente, haben aufgrund ihrer chromophoren Gruppen polaren Charakter und werden daher von der vorgeschlagenen Minenmasse gut gebunden.

Damit Füllstoff- und Farbpigmentpartikel das Abstrichverhalten und die Konsistenz der Mine nicht negativ beeinflussen, etwa zu einer brüchigen, krümeligen Konsistenz führen, werden Füllstoffe und Farbpigmente mit einer mittleren Partikelgröße D90% < 20 µm eingesetzt.

Insbesondere hinsichtlich der Verarbeitung der Mine im Extrusionsverfahren ist ein Zusatz wenigstens eines Gleitmittels, insbesondere eines Fettsäuresalzes, mit einem Gehalt von 1% bis 10% vorteilhaft, wobei Calciumstearat, Magnesiumstearat, Zinkstearat und Aluminiumtristearat bevorzugt sind. Möglich ist aber auch ein Zusatz anderer Gleitmittel wie Ethylen-bis-stearoyldiamin (EBS).Weiterhin können übliche Additive wie Dispergierhilfsmittel, Stabilisatoren oder Konservierungsstoffe mit einem Anteil 1% bis 15% enthalten sein.

Im Folgenden sind fünf Beispielrezepturen von gefärbten Minen aufgeführt. Die Ausgangsubstanzen (insgesamt z.B. 100 kg) werden in einem Mischer bei 120°C gemischt. Die Extrusion der Minenmasse zu Minensträngen mit einem Durchmesser von 3 mm erfolgt beispielsweise mit einem Zweischneckenextruder bei einer Temperatur von 130°C. Für die Extrusion von 100 kg Minenmasse wird etwa 1h benötigt. An den Extruder schließt sich eine Kühlstrecke von einigen Metern an. Die extrudierten Minenstränge werden zu Minen abgelängt, welche sofort weiterverarbeitet werden können.

### Beispiel 1 (orange)

| | |
|---|---|
| Aluminiumstearat (ALG D2 (CAS-Nr. 97404-28-9) **¹⁾** | 2,0% |
| Ethylen-Copolymer (Fusabond W PC576) **¹⁴⁾** Triglycerid (Polycerin Hydro RD 907, | 6,9% |
| CAS-Nr. 801670-4, Smp. ca. 66°C) ²⁾ Oxidiertes Polyethylenwachs (Licowax PED 121, | 5,0% |
| CAS-Nr. 68441-17-8 **³⁾** | 11,0% |
| Kaolin (ASP 602) **⁴⁾** | 65,0% |
| Titandioxid (KRONOS 2300) **⁸⁾** | 8,7% |
| Farbpigment (BAYFERROX 120 N) **¹⁵⁾** | 0,8% |
| Farbpigment (PERMANENTORANGE G) **¹⁰⁾** | 0,1% |
| Farbpigment (HOSTAPERMROT D3G) 70 **¹⁰⁾** | 0,4% |
| Stabilisator Irganox 1010 **⁴⁾** | 0,1% |

### Beispiel 2 (hellblau)

| | |
|---|---|
| Aluminiumdistearat (LIGASTAR AL D2, CAS-Nr. 97404-28-9,) **¹⁾** | 1,8% |
| Triglycerid (wie Beispiel 1) | 6,12% |
| Gleitmittel (Crodamol EBS) **¹⁴⁾** | 2,5% |
| Oxidiertes Polyethylenwachs (wie Beispiel 1) | 10,58% |
| LLDPE (IC32) **¹⁴⁾** | 1,5% |
| Kaolin (ASP 602) **⁴⁾** | 66,3% |
| Farbpigment (COSMOS BLUE PRPL) **¹⁷⁾** | 1,0% |
| Titandioxid (KRONOS 2300) **⁸⁾** | 10,0% |
| Stabilisator (Irgafos 168) **⁴⁾** | 0,2% |

### Beispiel 3 (rot)

| | |
|---|---|
| Aluminiumdistearat (LIGA ALG-V, CAS-Nr. 97404-28-9) **¹⁾** | 2,5% |
| Palmöl raffiniert Oxidiertes Polyethylenwachs (Licowax PED 121, | 2,5% |
| CAS-Nr. 68441-17-8) **³⁾** | 11,0% |
| Polystyrol (PS Amorphous) **¹⁸⁾** | 4,0% |
| Kaolin (ASP 602)**⁴⁾** | 77,0% |
| Farbpigment (PERMANENTROT FGR) **¹⁰⁾** | 2,55% |
| Farbpigment (IRGALITHGELB GO) **¹⁰⁾** | 0,45% |

### Beispiel 4 (braun)

| | |
|---|---|
| Aluminiumdistearat (wie Beispiel 3) | 2,12% |
| Triglycerid (wie Beispiel 1) | 6,12% |
| Oxidiertes Polyethylenwachs (wie Beispiel 1) | 11,76% |
| Polystyrol (wie Beispiel 3) | 2,5% |
| Kaolin (wie Beispiel 1) | 68,02% |
| Gleitmittel (Calciumstearat) | 2,0% |
| Farbpigment (RUSS PRINTEX 60) ^{**19**)} | 0,08% |
| Farbpigment (BAYFERROX 120 N) **¹⁵⁾** | 4,5% |
| Farbpigment (HANSAGELB G 02 **¹⁰⁾** | 2,4% |
| Farbpigment (LUTETIA ORANGE JN) **¹⁰⁾** | 0,5% |

### Beispiel 5 (hellgrün)

| | | |
|---|---|---|
| Aluminiumdistearat (wie Beispiel 3) | | 3,1% |
| Triglycerid (wie Beispiel 1) | | 4,9% |
| Oxidiertes Polyethylenwachs (wie Beispiel 1) | | 9,0% |
| HDPE (IB58, High Melt Index) **¹⁶⁾** | | 3,0% |
| Kaolin (wie Beispiel 1) | | 76,0% |
| Farbpigment (PV-ECHTGRÜN GNX) **¹⁰⁾** | | |
| | 0,75% | |
| Farbpigment (HANSAGELB 10 G) **¹⁰⁾** | | 2,15% |
| Farbpigment (IRGALITHGELB GO) **⁶⁾** | | 1,1% |

Alle Prozentangaben sind Gewichtsprozent.

### Hersteller:

1) Peter Greven, D-53902 Bad Münstereifel
2) TH.C.Tromm GmbH, D-50735 Köln/Cologne
3) Clariant AG, D-65929 Frankfurt am Main
4) BASF AG, D-67056 Ludwigshafen
5) Clariant AG, D-65929 Frankfurt am Main
6) BASF AG, D-67056 Ludwigshafen
7) Magnesita S.A., Bela Vista - 01311-000 Säo Paulo / SP8)
8) Kronos, D-51373 Leverkusen
9) Toyo INK, 60870 Villers Saint Paul, France
10) Clariant AG, D-65929 Frankfurt am Main
11) Comarplast Indüstria E Comércio Ltda., Sao Paulo/SP
12) Lanxess, D-51369 Leverkusen
13) Amberger Kaolinwerke, D-92242 Hirschau
14 Croda, Mettetal, DE
15 Lanxess, Krefeld, DE
16 Braskem, Brasilien
17 Toyo, JP
18 Innova, Brasilien
19 Evonik, Darmstadt, DE

## Patentansprüche

1. Mine für Schreib- und/oder Malzwecke, mit 15% bis 30% einer Minengrundmasse auf Fett- und Wachsbasis und 40% bis 80% wenigstens eines Füllstoffs und 0,1% bis 30% organische und/oder anorganische Farbpigmente, wobei die Minengrundmasse - bezogen auf die Gesamtmasse der Mine - 0,5% bis 10% Aluminiumdistearat, 5% bis 20% oxidiertes Polyethylenwachs, 5% bis 20% wenigstens einer Fettsäure und/oder wenigstens eines Fettsäurederivats mit einem Schmelzpunkt von 50°C bis 110°C, und 0,5% bis 10% wenigstens eines thermoplastischen Kunststoffs enthält.

2. Mine nach Anspruch 1, **gekennzeichnet durch** einen Gehalt an thermoplastischem Kunststoff von 0,5% bis 6%.

3. Mine nach Anspruch 1 oder 2, **dadurch gekennzeichnet, dass** als thermoplastischer Kunststoff ein Polyolefin enthalten ist.

4. Mine nach Anspruch 3, **gekennzeichnet durch** ein Polyolefin aus der Gruppe Polyethylen und Polyethylen-Copolymer.

5. Mine nach einem der vorhergehenden Ansprüche, **dadurch gekennzeichnet, dass** als thermoplastischer Kunststoff Polystyrol enthalten ist.

6. Mine nach einem der vorhergehenden Ansprüche, **dadurch gekennzeichnet,dass** ein Triglycerid mit einem Schmelzpunkt von 55°C bis 65°C enthalten ist.

7. Mine nach einem Anspruch 6, **dadurch gekennzeichnet, dass** das Triglycerid einen Schmelzpunkt von 58°C bis 62°C aufweist.

8. Mine nach einem der vorhergehenden Ansprüche,
**dadurch gekennzeichnet, dass** eine Mischung aus Stearinsäure enthaltender Sojabohnensäure (CAS-Nr. 57114) und hydrogeniertem Sojabohnenöl (CAS-Nr. 8016-70-4) mit einem Schmelzpunkt von 95°C bis 105°C enthalten ist.

9. Mine nach einem der vorhergehenden Ansprüche, **dadurch gekennzeichnet, dass** der Anteil an Minengrundmasse max. 26% beträgt.

10. Mine nach einem der vorhergehenden Ansprüche, **dadurch gekennzeichnet, dass** das Polyethylenwachs einen Schmelzpunkt von 115°C bis 125°C aufweist.

11. Mine nach Anspruch 9, **dadurch gekennzeichnet, dass** das Polyethylenwachs einen Schmelzpunkt von 118°C bis 122°C aufweist.

12. Mine nach einem der vorhergehenden Ansprüche, **gekennzeichnet durch** einen Anteil an Aluminiumdistearat von 1% bis 6%.

13. Mine nach Anspruch 12, **gekennzeichnet durch** einen Anteil an Aluminiumdistearat von 1% bis 3,5%.

14. Mine nach einem der vorhergehenden Ansprüche, **gekennzeichnet durch** einen Anteil an oxidiertem Polyethylenwachs von 7% bis 15%.

15. Mine nach einem der vorhergehenden Ansprüche, **gekennzeichnet durch** einen Anteil an Fettsäure und/oder Fettsäurederivat von 5% bis 15%.

16. Mine nach einem der vorhergehenden Ansprüche, **dadurch gekennzeichnet, dass** wenigstens ein Gleitmittel mit einem Anteil von 1% bis 10% enthalten ist.

17. Mine nach Anspruch 16, **gekennzeichnet durch** wenigstens ein Fettsäuresalz aus der Gruppe Calciumstearat, Magnesiumstearat und Zinkstearat.

18. Mine nach einem der vorhergehenden Ansprüche, **gekennzeichnet durch** wenigstens einen Füllstoff aus der Gruppe Kaolin, Glimmer, Bimsmehl und Talk.

19. Mine nach einem der vorhergehenden Ansprüche, **dadurch gekennzeichnet, dass** Füllstoffe und Farbpigmente eine mittlere Partikelgröße D90 < 20 µm aufweisen.

20. Mine nach einem der vorhergehenden Ansprüche, **gekennzeichnet durch** 1% bis 15% wenigstens eines Additivs.

21. Mine nach einem der vorhergehenden Ansprüche, **dadurch gekennzeichnet, dass** sie mit einer coextrudierten Umhüllung aus einem thermoplastischen Werkstoff versehen ist.

22. Mine nach Anspruch 21, **dadurch gekennzeichnet, dass** die Umhüllung aus einem Wood-Plastic-Compound besteht.

## Geänderte Patentansprüche

### Geänderte Patentansprüche gemäss Regel 137(2) EPÜ.

**1.** Mine für Schreib- und/oder Malzwecke, mit 15% bis 30% einer Minengrundmasse auf Fett- und Wachsbasis und 40% bis 80% wenigstens eines Füllstoffs und 0,1% bis 30% organische und/oder anorganische Farbpigmente, wobei die Minengrundmasse - bezogen auf die Gesamtmasse der Mine - 0,5% bis 10% Aluminiumdistearat, 5% bis 20% oxidiertes Polyethylenwachs, 5% bis 20% wenigstens einer Fettsäure und/oder wenigstens eines Fettsäurederivats mit einem Schmelzpunkt von 50°C bis 110°C, und 0,5% bis 10% wenigstens eines Polyolefins enthält.

**2.** Mine nach Anspruch 1, **gekennzeichnet durch** einen Gehalt an Polyolefin von 0,5% bis 6%.

**3.** Mine nach Anspruch 1 oder 2, **gekennzeichnet durch** ein Polyolefin aus der Gruppe Polyethylen und Polyethylen-Copolymer.

**4.** Mine nach einem der vorhergehenden Ansprüche, **dadurch gekennzeichnet, dass** als thermoplastischer Kunststoff Polystyrol enthalten ist.

**5.** Mine nach einem der vorhergehenden Ansprüche, **dadurch gekennzeichnet, dass** ein Triglycerid mit einem Schmelzpunkt von 55°C bis 65°C enthalten ist.

**6.** Mine nach Anspruch 5, **dadurch gekennzeichnet, dass** das Triglycerid einen Schmelzpunkt von 58°C bis 62°C aufweist.

**7.** Mine nach einem der vorhergehenden Ansprüche,
**dadurch gekennzeichnet,**
**dass** eine Mischung aus Stearinsäure enthaltender Sojabohnensäure (CAS-Nr. 57114) und hydrogeniertem Sojabohnenöl (CAS-Nr. 8016-70-4) mit einem Schmelzpunkt von 95°C bis 105°C enthalten ist.

**8.** Mine nach einem der vorhergehenden Ansprüche, **dadurch gekennzeichnet, dass** der Anteil an Minengrundmasse max. 26% beträgt.

**9.** Mine nach einem der vorhergehenden Ansprüche, **dadurch gekennzeichnet, dass** das Polyethylenwachs einen Schmelzpunkt von 115°C bis 125°C aufweist.

**10.** Mine nach Anspruch 9, **dadurch gekennzeichnet, dass** das Polyethylenwachs einen Schmelzpunkt von 118°C bis 122°C aufweist.

**11.** Mine nach einem der vorhergehenden Ansprüche, **gekennzeichnet durch** einen Anteil an Aluminiumdistearat von 1% bis 6%.

**12.** Mine nach Anspruch 11, **gekennzeichnet durch** einen Anteil an Aluminiumdistearat von 1% bis 3,5%.

**13.** Mine nach einem der vorhergehenden Ansprüche, **gekennzeichnet durch** einen Anteil an oxidiertem Polyethylenwachs von 7% bis 15%.

**14.** Mine nach einem der vorhergehenden Ansprüche, **gekennzeichnet durch** einen Anteil an Fettsäure und/oder Fettsäurederivat von 5% bis 15%.

**15.** Mine nach einem der vorhergehenden Ansprüche, **dadurch gekennzeichnet, dass** wenigstens ein Gleitmittel mit einem Anteil von 1% bis 10% enthalten ist.

**16.** Mine nach Anspruch 15, **gekennzeichnet durch** wenigstens ein Fettsäuresalz aus der Gruppe Calciumstearat, Magnesiumstearat und Zinkstearat.

**17.** Mine nach einem der vorhergehenden Ansprüche, **gekennzeichnet durch** wenigstens einen Füllstoff aus der Gruppe Kaolin, Glimmer, Bimsmehl und Talk.

**18.** Mine nach einem der vorhergehenden Ansprüche, **dadurch gekennzeichnet, dass** Füllstoffe und Farbpigmente eine mittlere Partikelgröße D90 < 20 µm aufweisen.

**19.** Mine nach einem der vorhergehenden Ansprüche, **gekennzeichnet durch** 1% bis 15% wenigstens eines Additivs.

**20.** Mine nach einem der vorhergehenden Ansprüche, **dadurch gekennzeichnet, dass** sie mit einer coextrudierten Umhüllung aus einem thermoplastischen Werkstoff versehen ist.

**21.** Mine nach Anspruch 21, **dadurch gekennzeichnet, dass** die Umhüllung aus einem Wood-Plastic-Compound besteht.
